# EUROPÄISCHE PATENTANMELDUNG

(11) **EP 4 372 972 A1**
(43) Veröffentlichungstag der Anmeldung: **22.05.2024**
(21) Anmeldenummer: 22208279.4
(22) Anmeldetag: 18.11.2022
(51) Int. Cl.: H02K 41/03, H02K 1/14

(54) **LINEARMOTOR FÜR EIN TRANSPORTSYSTEM**

(71) Anmelder: Schneider Electric Industries SAS, 92500 Rueil-Malmaison (FR)
(72) Erfinder: Kammerer, Thomas, 77948 Friesenheim (DE); Brechtefeld, Frank, 77652 Offenburg (DE); Ohnemus, Stefan, 77978 Schuttertal (DE)
(74) Vertreter: Manitz Finsterwald Patent- und Rechtsanwaltspartnerschaft mbB

(57) **Zusammenfassung**

Ein Linearmotor für ein Transportsystem, insbesondere für ein Multi-Carrier-System, weist ein Joch mit mehreren nacheinander angeordneten Zähnen und mehrere an den Zähnen angeordnete Antriebsspulen auf. Die Antriebsspulen sind ausgebildet, mit Antriebsmagneten eines Transportelements zusammenzuwirken, um eine Antriebskraft zum Bewegen des Transportelements entlang einer Führungsbahn des Transportsystems zu bewirken. Die Zähne weisen an den beiden Enden des Jochs angeordnete Randzähne auf. Zumindest einer der Randzähne ist gegenüber den übrigen Zähnen geneigt.

## Beschreibung

Die Erfindung betrifft einen Linearmotor für ein Transportsystem, insbesondere für ein Multi-Carrier-System, sowie ein Transportsystem, das mehrere Linearmotoren aufweist.

Transportsysteme, das heißt insbesondere Multi-Carrier-Systeme, umfassen vorzugsweise eine Vielzahl von Transportelementen, sogenannte Carrier oder Läufer, welche mittels mehreren entlang einer Führungsbahn in Reihe angeordneten Linearmotoren bewegt werden. Die Transportelemente sind dabei einzeln und unabhängig voneinander entlang der Führungsbahn bewegbar, sodass Multi-Carrier-Systeme die Möglichkeit schaffen, flexibel an verschiedene industrielle Prozesse angepasst zu werden und insbesondere auch auf Veränderungen in einem industriellen Prozess flexibel reagieren zu können.

Die Antriebskraft für die Transportelemente wird elektromagnetisch erzeugt, indem die Linearmotoren jeweils mit einem Joch, das mehrere Zähne aufweist, versehen sind. An den Zähnen sind Antriebsspulen angeordnet, die mit Antriebsmagneten der Transportelemente zusammenzuwirken. Die Zähne sind jeweils durch eine Nutteilung voneinander beabstandet, jedoch treten an den Übergängen zwischen zwei benachbarten Linearmotoren Nutteilungsfehler auf, die zu magnetischen Unstetigkeiten und zu einer daraus resultierenden verringerten Antriebskraft für die Transportelemente an den Übergängen führen. Ursachen für diesen Nutteilungsfehler können beispielsweise Toleranzen, nötiger Raum für eine Gehäusewand, ein Montagespalt oder ein am Linearmotor vorhandener Montageraum für eine nötige Abdeckung sein.

Es ist eine Aufgabe der vorliegenden Erfindung, das Magnetfeld eines Transportsystems zu homogenisieren.

Diese Aufgabe wird durch den Gegenstand der unabhängigen Ansprüche gelöst. Vorteilhafte Weiterbildungen sind Gegenstand der Unteransprüche und ergeben sich aus der Beschreibung und den Zeichnungen.

Der erfindungsgemäße Linearmotor für ein Transportsystem, insbesondere für ein Multi-Carrier-System, weist ein Joch mit mehreren nacheinander angeordneten Zähnen und mehrere an den Zähnen angeordnete Antriebsspulen auf. Die Antriebsspulen sind ausgebildet, mit Antriebsmagneten eines Transportelements zusammenzuwirken, um eine Antriebskraft zum Bewegen des Transportelements entlang einer Führungsbahn des Transportsystems zu bewirken. Die Zähne weisen an den beiden Enden des Jochs angeordnete Randzähne auf, wobei zumindest einer der Randzähne gegenüber den übrigen Zähnen geneigt ist.

Vorzugsweise können beide Randzähne gegenüber den übrigen Zähnen geneigt sein.

Das insbesondere aus einem ferromagnetischen Material bestehende Joch erstreckt sich vorzugsweise entlang einer Richtung, die in etwa der Erstreckungsrichtung der Führungsbahn entspricht. Parallel zueinander ragen Zähne insbesondere rechtwinklig zur Erstreckungsrichtung des Jochs mit vorzugsweise gleichen Abständen zueinander ab, die sich von einem Zahngrund an der Verbindungsstelle zum Joch zu einem freien Ende des Zahns erstrecken. Die Zähne sind üblicherweise Teil des Jochs und einteilig mit diesem ausgebildet, jedoch ist grundsätzlich auch denkbar, dass die Zähne und das Joch zweiteilig ausgebildet und miteinander verbunden sind. Die Zähne eines jeden Linearmotors sind somit in Reihe entlang der Erstreckungsrichtung des Jochs angeordnet, wobei der erste Zahn und der letzte Zahn in dieser Reihe, also die Zähne, die jeweils an einen vor- oder nachgelagerten Linearmotor grenzen, als Randzähne bezeichnet werden.

Die Antriebsspulen weisen in der Regel einen Spulenkörper und einen darauf aufgewickelten Draht auf, wobei vorzugsweise die Antriebsspulen so an den Zähnen angeordnet werden, dass jeder Zahn eine zentrale Öffnung des jeweiligen Spulenkörpers aufnimmt, sodass die jeweilige Antriebsspule den jeweiligen Zahn umschließt. Das freie Ende eines Zahns steht dabei in der Regel über die Antriebsspule geringfügig hervor, oder es schließt in etwa bündig mit der Antriebsspule ab.

Die Zähne weisen jeweils an ihrem freien Ende einen Kopf auf, und die Köpfe benachbarter Zähne sind um eine Nutteilung voneinander beabstandet. Die Nutteilung ist ein äußerst relevantes Maß für die Ausprägung des Magnetfelds und definiert den Abstand zwischen den Mittelachsen zweier benachbarter Zähne an deren freien Enden und dementsprechend den Abstand der Mittelachsen zweier benachbarter Antriebsspulen. Im Idealfall sind innerhalb eines Linearmotors bzw. innerhalb aller Linearmotoren eines Transportsystems die Nutteilungen der Zähne identisch.

Die Zähne weisen jeweils einen Zahngrund auf, wobei die Zahngründe benachbarter Zähne um einen Zahngrundabstand voneinander beabstandet sind. Vorzugsweise ist der Zahngrundabstand der Zähne identisch zueinander, allerdings kann erfindungsgemäß der Zahngrundabstand der Randzähne zu ihren benachbarten Zähnen von den Zahngrundabständen zwischen den übrigen Zähnen abweichen, insbesondere kleiner sein. Der Zahngrundabstand bezeichnet insbesondere den Abstand zwischen den Flanken zweier benachbarter Zähne am Zahngrund.

An den Übergangsstellen zweier aneinander angrenzender Linearmotoren besteht zwischen dem letzten Randzahn des vorangehenden Linearmotors und dem ersten Randzahn des nachfolgenden Linearmotors in der Regel ein Nutteilungsfehler, das heißt, die Nutteilung zwischen den beiden Randzähnen entspricht nicht der Nutteilung der übrigen Zähne innerhalb eines Linearmotors, was zu einer Inhomogenität des magnetischen Felds, einer verringerten Antriebskraft für die Transportelemente und zu einer erschwerten Steuerbarkeit führen kann.

Dadurch dass die Randzähne geneigt sind, ist auch die Antriebsspule, die den Randzahn umgibt, geneigt angeordnet, was jedoch in der Praxis nicht nachteilig für ein homogenes Magnetfeld ist. Der Neigungswinkel der Randzähne ist vorzugsweise eher klein und kann beispielsweise maximal 3°, vorzugsweise maximal 1° betragen.

Insbesondere kann der Randzahn oder beide Randzähne in der Erstreckungsrichtung des Jochs geneigt sein, und zwar insbesondere so, dass der Kopf des Randzahns in der Erstreckungsrichtung des Jochs dem Ende des Jochs zugeneigt ist. Mit anderen Worten ist der Kopf des Randzahns dem Ende des Jochs in der Erstreckungsrichtung näher als der Zahngrund des Randzahns.

Insbesondere erfolgt dies so, dass die Nutteilung zwischen dem Randzahn und dem benachbarten Zahn desselben Linearmotors der Nutteilung zwischen den übrigen Zähnen entspricht. Die Erfindung sieht damit vor, dass der Zahngrund des Randzahns näher an den Zahngrund des benachbarten Zahns rückt als dies bei einem nicht geneigten Randzahn der Fall wäre. Mit dieser Maßnahme kann der Abstand zwischen benachbarten Randzähnen benachbarter Linearmotoren optimiert werden, da der Randbereich des Linearmotors kompakter gestaltet werden kann und der Randzahn insbesondere mehr Platz für eine kompakte Installation einer Abdeckung des Linearmotors lässt. Somit kann die Nutteilung zwischen diesen benachbarten Randzähnen so eingestellt wird, dass der Nutteilungsfehler seinem Sollwert möglichst nahekommt. Dies ermöglicht eine Homogenisierung des magnetischen Felds insbesondere an den Übergängen zwischen benachbarten Linearmotoren und dadurch eine Optimierung des Schubkraftverlaufs mit einer Maximierung der Schubkraft am Übergang.

Die Zähne weisen in der Regel jeweils eine erste Zahnflanke, eine zweite Zahnflanke, einen ersten Formwinkel zwischen dem freien Ende und der ersten Zahnflanke und einen zweiten Formwinkel zwischen dem freien Ende und der zweiten Zahnflanke auf, wobei sich der erste Formwinkel und/oder der zweite Formwinkel der Randzähne von den jeweiligen Formwinkeln der übrigen Zähne unterscheidet.

Vorzugsweise ist die Summe der beiden Formwinkel der Randzähne zu der Summe der beiden Formwinkel der übrigen Zähne identisch. Dies ist insbesondere vorteilhaft, um den Spulenkörper, der regelmäßig eine vorgegebene, leichte Konizität bzw. eine Entformungsschräge aufweist, passend an dem Randzahn anordnen zu können.

Die Zähne weisen eine Höhe vom Zahngrund bis zum freien Ende und eine Breite quer zu der Höhe, nämlich von einer Zahnflanke zur anderen Zahnflanke, auf. Die Randzähne können eine geringere Breite aufweisen als die übrigen Zähne, also dünner sein als die übrigen Zähne. Gleichzeitig können die Randzähne eine größere Höhe aufweisen als die übrigen Zähne.

Vorzugsweise ist die Anzahl der Wicklungen der an den Randzähnen angeordneten Antriebsspulen identisch zu der Anzahl der Wicklungen der an den übrigen Zähnen angeordneten Antriebsspulen. Dies kann selbst dann gelten, wenn die Randzähne und die daran angeordneten Antriebsspulen höher sind als die übrigen Zähne. Aufgrund der gleichen Anzahl Wicklungen bei größerer Höhe kann sich ggfs. die Anzahl von Lagen des aufgewickelten Drahts verringern.

Das jeweilige freie Ende der Randzähne kann über ihre jeweilige Antriebsspule in einem Anbindungsbereich hervorstehen, wobei der Anbindungsbereich geeignet ist, eine Abdeckung des Linearmotors anzubringen.

Das Joch kann eine Jochdicke aufweisen, die im Bereich der Randzähne reduziert ist. Dadurch kann der ggfs. höhere Randzahn durch eine reduzierte Dicke des Jochs ausgeglichen werden, sodass dieser vorzugsweise bündig mit den übrigen Zähnen abschließt.

In einer Ausgestaltung kann die Nutteilung zu den Randzähnen hin größer werden, wobei die größte Nutteilung zwischen den Randzähnen und ihren jeweils benachbarten Zähnen erreicht wird. Bei dieser Ausgestaltung ist die Nutteilung zwischen den Zähnen eines Linearmotors folglich nicht oder nur teilweise konstant, sondern wird stetig von Zahn zu Zahn größer, bis sie ihr Maximum zwischen dem Randzahn und dem unmittelbar vorangehenden Zahn erreicht. Die Nutteilung zwischen den beiden Randzähnen benachbarter Linearmotoren ist dabei regelmäßig jedoch größer als die Nutteilung zwischen dem Randzahn und dem unmittelbar vorangehenden Zahn. Somit soll eine sich gleitend verändernde Nutteilung erzielt werden, um den Nutteilungsfehler auf mehrere Zähne aufzuteilen.

Die Zähne und/oder die Köpfe können von dem Joch separat ausgebildete Einzelteile sein, wobei die Köpfe die Zähne zumindest teilweise seitlich überragen. Dadurch können entweder die Zähne mit ihren Köpfen oder die Köpfe separat angebracht werden. Dies erlaubt es beispielsweise, unterschiedliche Zähne oder Köpfe vorzusehen, bei denen die Köpfe die Zähne seitlich überragen und so die Nutteilung, insbesondere ansteigend, verändern. So kann eine sich gleitend verändernde Nutteilung erzielt werden, um den Nutteilungsfehler auf mehrere Zähne aufzuteilen.

Das erfindungsgemäße Transportsystem ist insbesondere ein Multi-Carrier-System, welches mehrere zuvor beschriebene Linearmotoren, die aneinandergereiht angeordnet sind und eine Führungsbahn ausbilden, und zumindest ein Transportelement aufweist, das mittels der Linearmotoren entlang der Führungsbahn bewegbar ist.

Nachfolgend wird die Erfindung schematisch und beispielhaft unter Bezugnahme auf die Zeichnungen beschrieben. Darin zeigt:
- Fig. 1: eine perspektivische Teilansicht eines Multi-Carrier-Systems,
- Fig. 2: eine teilweise Ansicht von zwei Jochen mit Zähnen und Antriebsspulen im Übergangsbereich zweier Linearmotoren,
- Fig. 3: ein Seitenansicht eines Teils eines Jochs mit Zähnen und Antriebsspulen,
- Fig. 4: eine Abdeckung von einem Linearmotor,
- Fig. 5: eine Seitenansicht eines Jochs mit Antriebsspulen und der befestigten Abdeckung und
- Fig. 6a bis 6d: verschiedene Ausführungen eines Jochs mit jeweiligen Zähnen.

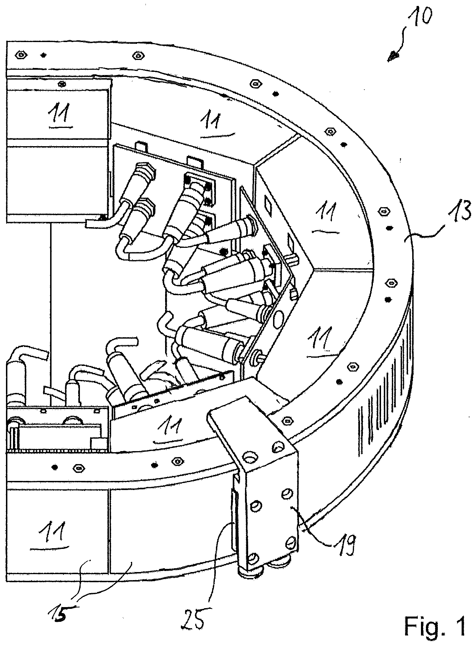

Fig. 1 zeigt perspektivisch einen Teil eines als Multi-Carrier-System ausgebildeten Transportsystems 10. Das Transportsystem 10 weist mehrere Linearmotoren 11 auf, welche aneinandergereiht angeordnet sind und eine Führungsbahn 13 ausbilden, entlang der in der Regel mehrere Transportelemente 19, von denen hier nur eines gezeigt ist, mittels der Linearmotoren 11 bewegt werden. Die Linearmotoren 11 können in sich geschlossen angeordnet sein und eine geschlossene Führungsbahn 13 für die Transportelemente 19 ausbilden, entlang der die Transportelemente 19 theoretisch unendlich lang bewegt werden können, oder es kann sich um ein "offenes" System mit einem Anfang und einem Ende handeln.

Die Transportelemente 19 werden durch die Linearmotoren 11 magnetisch angetrieben. Dazu weisen die Transportelemente 19 einen oder mehrere Antriebsmagnet 25 auf, welche mittels eines sich verändernden und/oder wandernden Magnetfelds, welches von den Linearmotoren 11 erzeugt wird, mit einer Antriebskraft beaufschlagt werden. Die Antriebskraft führt zu einer Bewegung der Transportelemente 19 entlang der Führungsbahn 13. Insbesondere können die Transportelemente 19 unabhängig und separat voneinander bewegt werden. Die Linearmotoren 11 werden von einer nicht dargestellten Steuereinheit angesteuert, um die jeweiligen Transportelemente 19 anzutreiben.

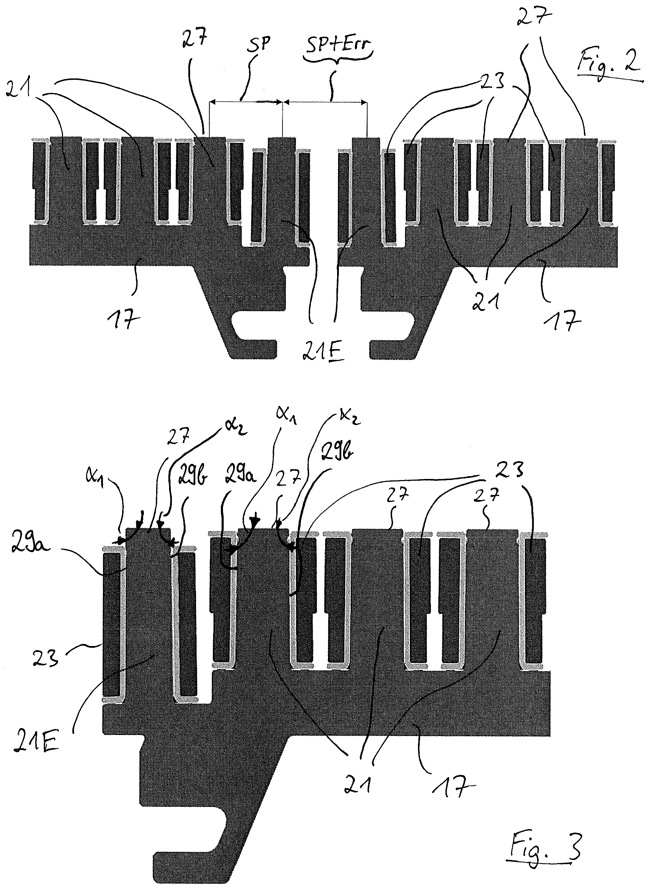

Um das sich verändernde und/oder wandernde Magnetfeld zu erzeugen, sind die Linearmotoren 11, wie aus Fig. 2 und 3 ersichtlich, jeweils mit Antriebsspulen 23 versehen, die mit den Antriebsmagneten 25 der Transportelemente 11 zusammenwirken. Die Antriebsspulen 23 sind an Zähnen 21 eines Jochs 17 angeordnet, wobei die Zähne 21 in Reihe entlang der Erstreckungsrichtung des Jochs 17 angeordnet sind und sich parallel zueinander und seitlich zur Erstreckungsrichtung des Jochs 17 weg erstrecken. Der erste und der letzte Zahn 21 eines jeden Linearmotors 11 können dabei als Randzähne 21E bezeichnet werden. Das Joch 17 und die Zähne 21, 21E sind im vorliegenden Beispiel einteilig ausgestaltet und bestehen vorzugsweise aus einem ferromagnetischen Material.

Die Zähne 21 weisen jeweils einen Zahngrund an der Verbindungsstelle zum Joch 17, einen Kopf 27 mit einem freien Ende, eine sich von dem Zahngrund zum freien Ende erstreckende erste Zahnflanke 29a, eine sich von dem Zahngrund zum freien Ende erstreckende zweite Zahnflanke 29b, einen ersten Formwinkel α₁ zwischen dem freien Ende und der ersten Zahnflanke 29a und einen zweiten Formwinkel α₂ zwischen dem freien Ende und der zweiten Zahnflanke 29b auf.

Die Köpfe 27 benachbarter Zähne 21 sind jeweils um eine in Fig. 2 gekennzeichnete Nutteilung SP voneinander beabstandet, die den Abstand zwischen den Mittelachsen zweier benachbarter Zähne 21 an deren freien Enden und dementsprechend den Abstand der Mittelachsen zweier benachbarter Antriebsspulen 23 definiert. Im Idealfall sind innerhalb eines Linearmotors 11 bzw. innerhalb aller Linearmotoren 11 eines Transportsystems 10 die Nutteilungen SP zwischen den Zähnen 21 identisch.

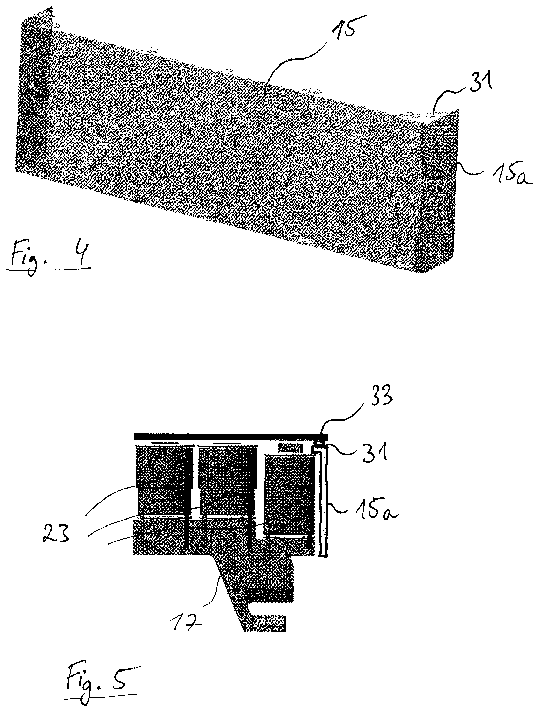

Zwischen dem letzten Randzahn 21E eines Linearmotors 11 und dem ersten Randzahn 21E eines unmittelbar nachfolgenden Linearmotors 11 ist die Nutteilung SP, wie in Fig. 2 gezeigt, in der Regel nicht einzuhalten, sondern der Abstand zwischen den beiden Randzähnen 21E wird um den Nutteilungsfehler Err vergrößert. Ursache hierfür sind Toleranzen, ein Montagespalt, Materialausdehnungen aufgrund von Temperaturerhöhungen, aber auch, wie aus Fig. 4 und 5 ersichtlich, das Erfordernis, eine Abdeckung 15 mit einer Seitenabdeckung 15a im Übergangsbereich zwischen zwei Linearmotoren 11 anzubringen. Die Nutteilungsfehler Err führen, soweit sie vom Idealwert abweichen, zu magnetischen Unstetigkeiten und zu einer daraus resultierenden verringerten Antriebskraft für die Transportelemente 19 an den Übergängen und sind somit möglichst zu eliminieren bzw. auf einen optimierten Wert einzustellen.

Im vorliegenden Ausführungsbeispiel gemäß Fig. 2 und 3 sind die beiden Randzähne 21E gegenüber den übrigen Zähnen 21 in der Erstreckungsrichtung des jeweiligen Linearmotors 11 beziehungsweise des jeweiligen Jochs 17 leicht geneigt, sodass die jeweiligen freien Enden der Randzähne 21E den benachbarten Randzähnen 21E der benachbarten Linearmotoren 11 etwas näher sind als der Zahngrund des jeweiligen Randzahns 21E. Anders ausgedrückt ist der Zahngrund des jeweiligen Randzahns 21E dem benachbarten Zahn 21 desselben Linearmotors 11 in der Erstreckungsrichtung etwas näher als das freie Ende dieses Randzahns 21E. Der Neigungswinkel der Endzähne 21E kann beispielsweise etwa 0,5° bis etwa 1° betragen. Denkbar sind aber auch größere oder kleinere Neigungswinkel im Bereich von etwa 0,2° bis etwa 3°.

Zudem unterscheiden sich im gezeigten Ausführungsbeispiel der erste Formwinkel α₁ und der zweite Formwinkel α₂ der Randzähne 21E von den jeweiligen Formwinkeln α₁, α₂ der übrigen Zähne 21. Allerdings ist die Summe der beiden Formwinkel α₁, α₂ der Randzähne 21E identisch zu der Summe der beiden Formwinkel α₁, α₂ der übrigen Zähne 21. Beispielsweise ist es denkbar, dass die Formwinkel α₁, α₂ der Zähne 21 jeweils etwa 90,5° betragen, wohingegen einer der Formwinkel α₁, α₂ eines Randzahns 21E 90° beträgt und der andere Formwinkel α₁, α₂ dieses Randzahns 21E 91° beträgt.

In anderen Ausgestaltungen ist es grundsätzlich allerdings auch denkbar, dass der zweite Formwinkel α₂ der Randzähne 21E gleich den jeweiligen zweiten Formwinkeln α₂ der übrigen Zähne 21 ist, indem die Entformungsschräge am Spulenkörper der Antriebsspule 23 am Randzahn 21E entsprechend reduziert wird. In diesem Fall ist die Summe der beiden Formwinkel α₁, α₂ der Randzähne 21E nicht identisch zu der Summe der beiden Formwinkel α₁, α₂ der übrigen Zähne 21.

Die Neigung der Randzähne 21E bewirkt, dass der Zahngrund des Randzahns 21E näher an den Zahngrund seines benachbarten Zahns 21 rückt. Dadurch kann der Randbereich des Linearmotors 11 kompakter gestaltet werden, insbesondere hinsichtlich der Installation der Abdeckung 15. Somit kann die Nutteilung SP zwischen benachbarten Randzähnen 21E benachbarter Linearmotoren 11 so eingestellt werden, dass der Nutteilungsfehler Err seinem Sollwert möglichst nahekommt. Der Idealwert für den Nutteilungsfehler Err kann "Null" sein, je nach Transportsystem kann der Idealwert aber auch ungleich Null sein, beispielsweise um Anforderungen für eine bestimmte Schutzklasse zu erfüllen. Die Optimierung des Nutteilungsfehlers Err ermöglicht eine Homogenisierung des magnetischen Felds insbesondere an den Übergängen zwischen benachbarten Linearmotoren 11 und dadurch eine Optimierung des Schubkraftverlaufs mit einer Maximierung der Schubkraft am Übergang.

Aufgrund der leichten Neigung der Randzähne 21E kann also der Raum zwischen den beiden Randzähnen 21E kompakter gestaltet werden, sodass die Randzähne 21E näher zueinander rücken, eine entsprechende Verlagerung der freien Enden der Randzähne 21E erzielt wird und so der Nutteilungsfehler Err reduziert werden kann. Dabei bewirkt die Anpassung der Formwinkel α₁, α₂, dass der Randzahn 21E, nämlich insbesondere der Zahngrund, nicht zu sehr nach außen, also zum Ende des jeweiligen Linearmotors 11 hin, gerückt wird. Indem die Summe der Formwinkel α₁, α₂ konstant gehalten wird, kann insbesondere sichergestellt werden, dass ein Spulenkörper der Antriebsspule 23, der regelmäßig eine vorgegebene, leichte Konizität bzw. eine Entformungsschräge aufweist, passend an dem Randzahn 21E angeordnet werden kann, was aber grundsätzlich auch dann möglich ist, wenn die Summe der Formwinkel α₁, α₂ nicht exakt konstant gehalten wird.

Wie Fig. 2 und 3 außerdem zeigen, weisen die Randzähne 21E verglichen mit den übrigen Zähnen 21 eine geringere Breite, also einen geringeren Abstand zwischen den beiden Zahnflanken 29a, 29b, auf.

Ferner weisen die Randzähne 21E verglichen mit den übrigen Zähnen 21 eine größere Höhe von ihrem Zahngrund zu ihrem freien Ende auf. Damit die freien Enden der Randzähne 21E dennoch zumindest im Wesentlichen bündig sind mit den freien Enden der übrigen Zähne 21, ist das Joch 17 hinsichtlich seiner Dicke im Bereich der Randzähne 21E entsprechend reduziert. Die größere Höhe der Randzähne 21E führt dazu, dass der Randzahn 21E, wie in Fig. 5 gezeigt, etwas über seine Antriebsspule 23 hervorsteht, obwohl die Antriebsspule 23 am Randzahn 21E ebenfalls eine etwas größere Höhe aufweist als die Antriebsspulen 23 der übrigen Zähne 21. Daraus folgt, dass in diesem Bereich, wie in Fig. 4 und 5 gezeigt, die Seitenabdeckung 15a mit einem Anbindungselement 31 positioniert und insbesondere mittels eines Klebemittels 33, alternativ beispielsweise mittels Nieten, befestigt werden kann. Dadurch dass so eine kompakte Anbringung der Abdeckung 15 und insbesondere der Seitenabdeckung 15a erzielt werden kann, kann ebenfalls der Erhöhung des Nutteilungsfehlers Err entgegengewirkt werden, da der Abstand zwischen benachbarten Linearmotoren 11 verringert wird.

Obwohl die Antriebsspule 23 am Randzahn 21E eine etwas größere Höhe aufweist als die Antriebsspulen 23 der übrigen Zähne 21, entspricht im vorliegenden Ausführungsbeispiel bei gleichem Drahtdurchmesser die Anzahl der Wicklungen der an den Randzähnen 21E angeordneten Antriebsspulen 23 der Anzahl der Wicklungen der an den übrigen Zähnen 21 angeordneten Antriebsspulen 23. Aufgrund der geringeren Höhe ergibt sich hieraus an den übrigen Zähnen 21 unter Umständen eine höhere Anzahl an Lagen verglichen mit den Antriebsspulen 23 der Randzähne 21E.

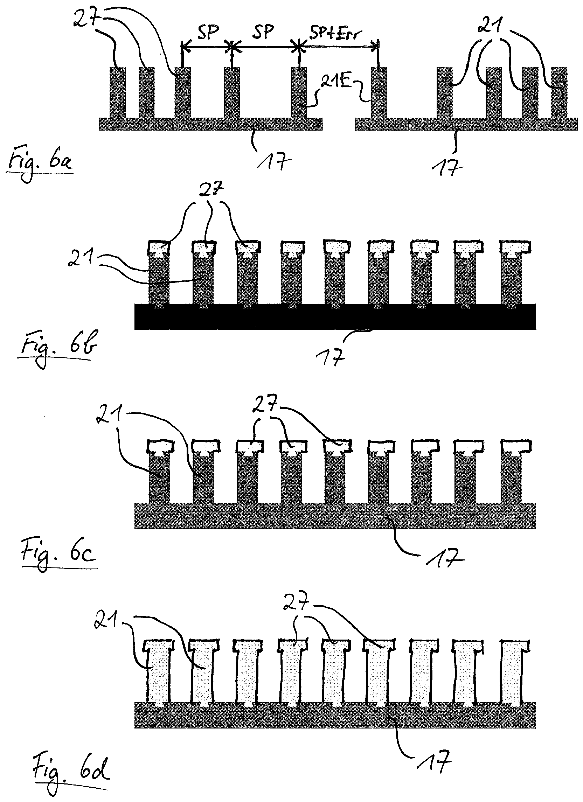

Fig. 6a bis 6d zeigen weitere alternative Möglichkeiten zur Umsetzung der Erfindung. Diese haben gemein, dass die Nutteilung SP innerhalb eines Linearmotors 11 nicht konstant ist, sondern zu den Randzähnen 21E hin sukzessive größer wird, wobei die größte Nutteilung SP innerhalb eines Linearmotors 11 zwischen den Randzähnen 21E und ihren jeweils benachbarten Zähnen 21 erreicht wird. Die Nutteilung SP zwischen den beiden Randzähnen 21E benachbarter Linearmotoren 11 ist dabei regelmäßig jedoch größer als die Nutteilung SP zwischen dem Randzahn 21E und dem unmittelbar vorangehenden Zahn 21. Somit kann eine sich gleitend verändernde Nutteilung SP erzielt werden, um den Nutteilungsfehler Err auf mehrere Zähne 21 "aufzuteilen".

Fig. 6a sieht vor, dass dieser Effekt dadurch erzielt wird, dass die Abstände der gesamten Zähne 21, 21E zueinander, also auch die Nutteilung SP, stetig erhöht wird. In Fig. 6b bis 6d wird eine sukzessiv erhöhte Nutteilung SP dadurch erzielt, dass die Zähne 21 und/oder die Köpfe 27 separat von dem Joch 17 als Einzelteile ausgebildet sind und die Köpfe 27 die Zähne 21 zumindest teilweise seitlich überragen. So sind in Fig. 6b die Zähne 21 und die Köpfe 27 separat von dem Joch 17 ausgebildet. In Fig. 6c ist das Joch 17 mit den Zähnen 21 einteilig ausgebildet, wobei die Köpfe 27 austauschbar sind. In Fig. 6d sind Köpfe 27 und Zähne 21 gemeinsam einteilig ausgebildet und können mit dem Joch 17 verbunden werden.

Indem die Köpfe 27 und/oder die Zähne 21 ihrer jeweiligen Position angepasst werden können, ermöglicht dies eine Auswahl, bei der die Köpfe 27 die Zähne 21 sukzessiv ansteigend seitlich überragen, sodass die Nutteilung SP gleitend und sukzessiv ansteigend eingestellt werden kann, um den Nutteilungsfehler Err auf mehrere Zähne 21 aufzuteilen.

### Bezugszeichenliste

- 10: Transportsystem
- 11: Linearmotor
- 13: Führungsbahn
- 15: Abdeckung
- 15a: Seitenabdeckung
- 17: Joch
- 19: Transportelement
- 21: Zahn
- 21E: Randzahn
- 23: Antriebsspule
- 25: Antriebsmagnet
- 27: Kopf
- 29a: Zahnflanke
- 29b: Zahnflanke
- 31: Anbindungselement
- 33: Klebemittel

- α₁: Formwinkel
- α₂: Formwinkel
- SP: Nutteilung
- Err: Nutteilungsfehler

## Patentansprüche

1. Linearmotor (11) für ein Transportsystem (10), insbesondere für ein Multi-Carrier-System, der ein Joch (17) mit mehreren nacheinander angeordneten Zähnen (21) und mehrere an den Zähnen (21) angeordnete Antriebsspulen (23) aufweist, welche ausgebildet sind, mit Antriebsmagneten (25) eines Transportelements (19) zusammenzuwirken, um eine Antriebskraft zum Bewegen des Transportelements (19) entlang einer Führungsbahn (13) des Transportsystems (10) zu bewirken,
wobei die Zähne (21) an den beiden Enden des Jochs (17) angeordnete Randzähne (21E) aufweisen,
und wobei zumindest einer der Randzähne (21E) gegenüber den übrigen Zähnen (21) geneigt ist.

2. Linearmotor (11) nach Anspruch 1,
**dadurch gekennzeichnet, dass** beide Randzähne (21E) gegenüber den übrigen Zähnen (21) geneigt sind.

3. Linearmotor (11) nach Anspruch 1 oder 2,
**dadurch gekennzeichnet, dass** der Randzahn (21E) oder beide Randzähne (21E) in der Erstreckungsrichtung des Jochs (17) geneigt ist oder sind.

4. Linearmotor (11) nach einem der vorstehenden Ansprüche,
**dadurch gekennzeichnet, dass** die Zähne (21) jeweils eine erste Zahnflanke (29a), eine zweite Zahnflanke (29b), einen ersten Formwinkel (a1) zwischen dem freien Ende und der ersten Zahnflanke (29a) und einen zweiten Formwinkel (a2) zwischen dem freien Ende und der zweiten Zahnflanke (29b) aufweisen, wobei sich der erste Formwinkel (a1) und/oder der zweite Formwinkel (α2) der Randzähne (21E) von den jeweiligen Formwinkeln (α1, α2) der übrigen Zähne (21) unterscheidet.

5. Linearmotor (11) nach Anspruch 4,
**dadurch gekennzeichnet, dass** die Summe der beiden Formwinkel (α₁, α₂) der Randzähne (21E) zu der Summe der beiden Formwinkel (α₁, α₂) der übrigen Zähne (21) identisch ist.

6. Linearmotor (11) nach einem der vorstehenden Ansprüche,
**dadurch gekennzeichnet, dass** die Zähne (21) jeweils einen Zahngrund aufweisen, wobei die Zahngründe benachbarter Zähne (21) um einen Zahngrundabstand voneinander beabstandet sind, und wobei sich der Zahngrundabstand der Randzähne (21E) zu ihren benachbarten Zähnen (21) von dem Zahngrundabstand der übrigen Zähne (21) zueinander unterscheidet, insbesondere kleiner ist.

7. Linearmotor (11) nach einem der vorstehenden Ansprüche,
**dadurch gekennzeichnet, dass** die Randzähne (21E) eine geringere Breite aufweisen als die übrigen Zähne (21).

8. Linearmotor (11) nach einem der vorstehenden Ansprüche,
**dadurch gekennzeichnet, dass** die Randzähne (21E) eine größere Höhe von einem Zahngrund zu dem freien Ende des jeweiligen Zahns (21E) aufweisen als die übrigen Zähne (21).

9. Linearmotor (11) nach Anspruch 8,
**dadurch gekennzeichnet, dass** die Anzahl der Wicklungen der an den Randzähnen (21E) angeordneten Antriebsspulen (23) identisch ist zu der Anzahl der Wicklungen der an den übrigen Zähnen (21) angeordneten Antriebsspulen (23).

10. Linearmotor (11) nach Anspruch 8 oder 9,
**dadurch gekennzeichnet, dass** das jeweilige freie Ende der Randzähne (21E) über seine jeweilige Antriebsspule (23) in einem Anbindungsbereich hervorsteht, wobei der Anbindungsbereich geeignet ist, eine Abdeckung (15) des Linearmotors (11) anzubringen.

11. Linearmotor (11) nach einem der vorstehenden Ansprüche,
**dadurch gekennzeichnet, dass** das Joch (17) eine Jochdicke aufweist, die im Bereich der Randzähne (21E) reduziert ist.

12. Linearmotor (11) nach einem der vorstehenden Ansprüche,
**dadurch gekennzeichnet, dass** die Zähne (21) jeweils an ihrem freien Ende einen Kopf (27) aufweisen, die Köpfe (27) benachbarter Zähne (21) um eine Nutteilung (SP) voneinander beabstandet sind, die Nutteilung (SP) zu den Randzähnen (21E) hin größer wird und die größte Nutteilung (SP) zwischen den Randzähnen (21E) und ihren jeweils benachbarten Zähnen (21) erreicht wird.

13. Linearmotor (11) nach Anspruch 12,
**dadurch gekennzeichnet, dass** die Zähne (21) und/oder die Köpfe (27) von dem Joch (17) separat ausgebildete Einzelteile sind, wobei die Köpfe (27) die Zähne (21) zumindest teilweise seitlich überragen.

14. Transportsystem (10), insbesondere Multi-Carrier-System, welches mehrere Linearmotoren (11) nach einem der vorstehenden Ansprüche, die aneinandergereiht angeordnet sind und eine Führungsbahn (13) ausbilden, und zumindest ein Transportelement (19) aufweist, das mittels der Linearmotoren (11) entlang der Führungsbahn (13) bewegbar ist.
